(19) Europäisches Patentamt / European Patent Office / Office européen des brevets

(11) **EP 2 003 604 B1**

(12) **EUROPEAN PATENT SPECIFICATION**

(45) Date of publication and mention
of the grant of the patent:
**24.10.2018 Bulletin 2018/43**

(51) Int Cl.:
**G06N 3/08** (2006.01)    **G06K 9/62** (2006.01)
**G06N 3/04** (2006.01)

(21) Application number: **07010210.8**

(22) Date of filing: **23.05.2007**

(54) **Self-organizing map with virtual map units**

Selbstorganisierende Abbildung mit virtuellen Abbildungseinheiten

Carte d'organisation automatique avec unités de cartes virtuelles

(84) Designated Contracting States:
**AT BE BG CH CY CZ DE DK EE ES FI FR GB GR HU IE IS IT LI LT LU LV MC MT NL PL PT RO SE SI SK TR**

(43) Date of publication of application:
**17.12.2008 Bulletin 2008/51**

(73) Proprietor: **Deutsche Telekom AG**
**53113 Bonn (DE)**

(72) Inventor: **Scheel, Christian**
**10557 Berlin (DE)**

(74) Representative: **Kampfenkel, Klaus**
**Blumbach - Zinngrebe**
**Patent- und Rechtsanwälte PartG mbB**
**Alexandrastrasse 5**
**65187 Wiesbaden (DE)**

(56) References cited:
**WO-A-02/21242**

- **GOPPERT J ET AL: "Topological interpolation in SOM by affine transformations" PROCEEDINGS EUROPEAN SYMPOSIUM ON ARTIFICIAL NEURAL NETWORKS 1995, 19 April 1995 (1995-04-19), pages 15-20, XP002457091 D-Facto public., BRUSSELS, BELGIUM ISBN: 2-9600049-3-0**

- **KASKI S: "Fast winner search for SOM-based monitoring and retrieval of high-dimensional data" ARTIFICIAL NEURAL NETWORKS, 1999. ICANN 99. NINTH INTERNATIONAL CONFERENCE ON (CONF. PUBL. NO. 470) EDINBURGH, UK 7-10 SEPT. 1999, LONDON, UK,IEE, UK, vol. 2, 7 September 1999 (1999-09-07), pages 940-945, XP006502176 ISBN: 0-85296-721-7**

- **ALBAYRAK S ET AL: "Combining self-organizing map algorithms for robust and scalable intrusion detection" PROCEEDINGS. 2006 INTERNATIONAL CONFERENCE ON INTELLIGENCE FOR MODELLING, CONTROL AND AUTOMATION. JOINTLY WITH INTERNATIONAL CONFERENCE ON INTELLIGENT AGENTS, WEB TECHNOLOGIES AND INTERNET COMMERCE 28-30 NOV. 2005 VIENNA, AUSTRIA, [Online] vol. 2, 28 November 2005 (2005-11-28), pages 122-130, XP002457326 IEEE Los Alamitos, CA, USA ISBN: 0-7695-2504-0 Retrieved from the Internet: URL:https://www.dai-labor.de/fileadmin/fil es/publications/albayrak-SOM_Anomaly_Detec tion_dai.pdf> [retrieved on 2007-10-26]**

- **TEUVO KOHONEN ET AL: "Self Organization of a Massive Document Collection" IEEE TRANSACTIONS ON NEURAL NETWORKS, IEEE SERVICE CENTER, PISCATAWAY, NJ, US, vol. 11, no. 3, May 2000 (2000-05), pages 574-585, XP011039475 ISSN: 1045-9227**

EP 2 003 604 B1

- ERNESTO CUADROS-VARGAS, ROSELI AP. FRANCELIN ROMERO, KLAUS OBERMAYER: "Speeding up algorithms of SOM Family for Large and High Dimensional Databases" PROCEEDINGS OF WSOM 2003, [Online] 11 September 2003 (2003-09-11), pages 167-172, XP002457092 Retrieved from the Internet: URL:ftp://ftp.cs.tu-berlin.de/pub/local/ni /papers/cuad_03_wsom.pdf> [retrieved on 2007-10-26]

**Description**

Field of the invention

The invention relates to information processing in general, and especially to a method and a system for processing digital information in which information items are mapped into an N-dimensional map such that similar information items map to similar positions within the map.

Background of the invention

Today neural networks are utilized in a wide variety of applications. A neural network typically comprises an interconnected group of nodes for information processing, wherein the nodes are simple processing elements having a function similar to neurons of a biological nervous system. Accordingly each node may receive inputs from many other nodes and send outputs to many other nodes while enhancing or inhibiting signals on the way, thereby forming a network with a complex behavior. In order to produce a desired signal flow through the neural network the processing parameters of the nodes typically can be adapted depending on the processing of input provided for training purposes, whereby the capability of adaptive learning is achieved. With special advantage neural networks can be applied for the purpose of identifying patterns or trends in data. A special type of neural network well suited for this purpose is the Self-Organizing Map (SOM). The Self-Organizing Map algorithm which was developed by Teuvo Kohonen in the early 1980s is an unsupervised learning algorithm which is commonly used to process high-dimensional data in order to visualize it on a two-dimensional screen. Because of its ability of projecting the high-dimensional spaces into the low-dimensional space while preserving the topological properties, thereby revealing its underlying structure, the SOM algorithm is used in a variety of applications. It is described for instance in "Self-Organizing Maps", Kohonen, T., Volume 30 of Springer Series in Information Sciences, Springer, Berlin, Heidelberg (1995) (Second Extended Edition 1997).

Exemplary applications comprise anomaly detection, data mining, pattern recognition, vector quantization, image analysis, speech recognition, signal processing, medical applications, electronic-circuit design, robotics, linguistics and many other applications. These areas of application have in common the need to observe great amounts of highly varying data.

When using the original SOM algorithm of Teuvo Kohonen it has the drawback of using too much memory, when implemented for computer use. A SOM basically consists of weights which are part of weight vectors with each weight vector forming a map unit. These weight vectors are prototypes for incoming input vectors and have the same structure. Each element or component in an input vector represents a feature which is represented in each map unit's weight vector. Consequently a high-dimensional input space leads to huge weight vectors which cause the SOM to be very memory lavishing.

Training a SOM is in general a very simple algorithm. It begins with finding the best matching map unit (BMU), where the distance between the input vector and the weight vector is the smallest on the whole map. This map unit then becomes more similar to the input vector as well as the surrounding map units in the neighborhood. In dependence to their topological distance to the BMU, the influence of becoming similar to the input vector differs. Close map units are influenced most and because neighboring map units are influenced similar, they become similar. The process of determining the BMU, however, can be very time-consuming for a large number of map units, since the weight vector of each map unit needs to be compared with the input vector.

The need of memory is directly connected to the number of map units and the number of trained features. Since each map unit is a prototype for incoming input data, each feature of this data must be represented with a weight. All these weights form the weight vectors which are found in every map unit. The number of weights which define the SOM is given by the product of map width, map height and number of features.

For representing huge sets of input data big SOMs are needed, otherwise the input data is not represented well. Unfortunately large SOMs require large amounts of memory space. This often results in the need to reduce the dimension of the input space, whereby necessary information is lost.

However, when using map units there is still a minimum number of map units which have to be used when there is a representation limit. This value is connected to the number of input values. Accordingly, for small collections of input data small maps suffice, but for the typical case of huge collections also big maps are needed.

Another problem is, that the training has to be fast. It is reasonable to keep as much of the input vectors in memory so that they can be used when needed. Hence the input vectors and the SOM share the same resource. The smaller the size of the SOM, the more input vectors can be held in memory, thereby increasing the speed of training.

From "Topological Interpolation in SOM by Affine Transformation" by J. Göppert et al., Proceedings European Symposium on Artificial Neural Networks 1995, April 19, 1995, pages 15-20, a method for reducing calculation time and memory space in training and retrieval of a SOM based on affine coordinates of a local coordinate system.

It is an object of the present invention to show a new and improved approach to processing digital information which allows to map information items into an N-dimensional map such that similar information items are mapped to similar positions within the map, wherein less storage capacity is needed than in solutions known in the prior art. Another object of the invention is to provide a representation of such an N-dimensional map by utilizing a training phase, wherein the training time is reduced as compared with the time needed to train a comparable SOM of a known type. Still another object of the invention is to reduce the time needed to determine a matching position within such an N-dimensional map for an input vector than is needed to determine the BMU in a comparable SOM of a known type.

Summary of the Invention

The inventive solution of the object is achieved by each of the subject matter of the respective attached independent claims. Advantageous and/or preferred embodiments or refinements are the subject matter of the respective attached dependent claims.

The inventive method for processing digital information provides for mapping information items into an N-dimensional map such that similar information items map to similar positions within the map. For this purpose the method comprises the steps of providing at least one information item and mapping said information item into said N-dimensional map by determining a matching position within the map for the information item, wherein each information item is represented by a multi-dimensional vector with M components, the N-dimensional map is represented by a set of M functions of the map position, and each of said M functions is associated with a respective one of the M vector components of the information item. The parameters N and M denote selectable natural numbers with $N \geq 1$ and $M \geq 1$, wherein typically $M > N$, in particular $M >> N$.

The M functions utilized in the inventive method form a representation of a SOM, wherein the functions replace the weight vectors of a known SOM. Since no weight vectors need to be stored, but only the respective function parameters, a tremendous amount of storage capacity is saved over a SOM according to the prior art. Since no definite grid structure is needed with map units each of which has an associated weight vector, in the following an N-dimensional map represented by said M functions also is referred to as a virtual SOM (VSOM), as virtual weight vectors can be calculated from the M functions for any given point within the N-dimensional map.

It has been found that functions which are suitable for replacing the weight vectors of a trained SOM of a known type has a maximum at one point of the N-dimensional map, from which the function is monotonically decreasing in any direction along the N-dimensional map. When referring to this type of function in the following also the term falloff function is used.

Accordingly, each of said M functions preferably has the form

$$\delta_j(x) = -a_j \cdot \varphi(fp_j, x) + b_j \tag{1}$$

with $j \in \{1,2,...,M\}$, where

$a_j,b_j$ :     constants with $a_j > 0$ and $b_j > 0$,

$x = (x^1,..,x^N)$ :     a point in the N-dimensional map,

$$fp_j = (fp_j^1,..,fp_j^N) \quad :$$
the point in the N-dimensional map where $\delta_j$ is maximal, and where

$$\varphi(fp_j, x) = \sqrt{\sum_{i=1}^{N} (fp_j^i - x^i)^2} \tag{2}$$

Typically the value of each component of said multi-dimensional vector describes a feature of the corresponding information item. Depending on the type of information item this can for instance be a frequency of occurrence of a predefined word or word stem in a text document or a parameter of a process state.

Since each of the M functions is associated with one of the M components of the multi-dimensional information item, the maxima $fp_j$ of the M functions in the following are also referred to as feature points.

In a first preferred embodiment of the method the step of determining the matching position for the information item comprises the steps of defining an array of map nodes with each node having a different map position, calculating for each map node of at least a subset of said array a corresponding multi-dimensional node vector with M components, the components of which are determined by calculating the output of the respective of said M functions for the map position of the respective map node, determining the multi-dimensional node vector which best matches the information item, and selecting for the matching position for the information item the position of the map node which corresponds to the multi-dimensional node vector which was determined to best match the information item.

The map nodes can be regarded as virtual map units (VMU). Instead of going through virtual map units which have fixed positions, a better choice can be to benefit from the fact that virtual map units can be computed anywhere. Certain refinements for finding the best matching virtual map unit (best matching unit; BMU), i.e. the matching position for the information item, can thereby be provided. There is at least one position for a VMU on the map which is closest to a given information item.

Quadtrees are often used to partition a two dimensional space by recursively decomposite a quadrant into four sub-quadrants. For searching on a SOM it is used for subdividing the space for searching. Because there is no need for being fixed to boundaries, the area of searching will be a quadrant centered by the old BMU. By quadtree search, the next BMU will be found in this area. The size of that area and the number of recursions preferably are chosen individually.

Unless the old BMU and the new BMU are the same, the search area will be different in the next iteration and the clusters of different input vectors will drift apart. For visual interpretation this effect is very useful.

Accordingly, the step of determining the matching position for the information item with advantage comprises the steps of

a) selecting a search region within the N-dimensional map,
b) dividing the search region into a pre-defined number of subregions,
c) defining a map node (130) within each of said subregions,
d) determining the subregion which best matches the information item by

- calculating for each of the defined map nodes a corresponding multi-dimensional node vector with M components, the components of which are determined by calculating the output of the respective of said M functions for the respective map position, and
- determining the multi-dimensional node vector which best matches the information item,

e) repeating steps b) through d) for a pre-defined number of recursions with the respective determined subregion as search region for the following recursion, and
f) selecting for the matching position for the information item a position within the subregion which best matches the information item (160).

Another proposed refinement is a neighborhood search, in the following also referred to as winner search, which is based on the idea of searching in the neighborhood of the old best matching unit. Neighborhood search in a SOM according to the prior art is known for instance from "Fast winner search for som-based monitoring and retrieval of high-dimensional data" by Kaski, S. in IEE Conference Publication, Volume 2., 1999, pages 940-945, and from "WEBSOM- self-organizing maps of document collections" by Honkela, T., Kaski, S., Lagus, K. and Kohonen, T., in Proceedings of WSOM'97, Workshop on Self-Organizing Maps, Espoo, Finland, June 4-6, Helsinki University of Technology, Neural Networks Research Centre, Espoo, Finland, 1997, pages 310-315.

In the cited references, which are incorporated herein by reference, a drawback with respect to a neighborhood search is described which results from the limitation of needing to wait for a SOM of known type to become stable, before a neighborhood search can be applied.

With the inventive method this drawback is obsolete, since such a winner search can be used from the beginning, because similar VMUs will be close to each other.

Starting from the old BMU, VMUs in the neighborhood are computed. The new BMU will be the closest of these VMUs to the input vector. If this VMU is part of the edge of this neighborhood, it will be the center of a new neighborhood search. For the determination of the next BMU in the neighborhood, the quadtree search described above can be used.

Accordingly, the above steps a) - f) for determining the matching position for the information item preferably are performed repeatedly, wherein in step a) the search region is selected such that the position of the respective previously determined matching position essentially is the center of the new search region.

In step d) said determining the multi-dimensional node vector which best matches the information item preferably comprises determining the node vector for which the Euclidian or any other selected distance measure to the information item is minimal.

In a second preferred embodiment the step of determining the matching position for the information item comprises the step of directly calculating the map position where the function

$$\gamma(mu, iv) = \sqrt{\sum_{j=1}^{M} \left(iv_j - \delta_j(mu)\right)^2} \qquad (3)$$

is minimal, where

$mu = (mu^1,...,mu^N)$ :      the map position in the N-dimensional map,
$iv = (iv_1,...,iv_M)$      : the M-dimensional information item
$\delta_j(mu)$ :                the respective one of the M functions.

By analytically calculating the minimum of equation (3) instead of making a comparison for a large array of map nodes the time necessary for determining the matching position for the information item is tremendously reduced.

The method preferably comprises a training phase for generating the map with the steps of

a) defining an array of map nodes with each node having a different map position,
b) defining for each map node an initial corresponding multi-dimensional weight vector with M components,
c) providing a set of information items,
d) determining for an information item of said set the best matching weight vector,
e) changing the component values of the determined best matching weight vector to better match the component values of the information item,
f) repeating steps d) and e) for all information items of said set, and
g) determining the M functions for representing the map from said array of multi-dimensional weight vectors.

Advantageously in step e) also the component values of the weight vectors neighboring the determined best matching weight vector are changed to better match the information item, wherein the amount of change depends on the distance between the map nodes corresponding to the best matching weight vector and the respective neighboring weight vector.

In this variant of the training phase essentially a prior art SOM represented by an array of map nodes is trained. From this trained SOM the M functions are then derived, for instance by fitting variable parameters of a given function to the respective component values of the weight vectors;

Another preferred embodiment of the training phase does not require to first train a prior art SOM, but directly starts from M initial functions.

Accordingly, the method preferably comprises a training phase for generating the map with the steps of:

a) providing M initial functions for representing the map,
b) providing a set of information items,
c) determining a matching position within the map for an information item of said set,
d) adapting the functions representing the map depending on the determined matching position and on the information item, and
e) repeating steps c) and d) for all information items of said set.

The training phase has the purpose of generating and storing a representation of said set of information items, wherein the set typically comprises a plurality of information items. The representation is constituted by the N-dimensional map that results from the training phase. The map, represented by said M functions, comprises topological information about the information items of the set.

For a known SOM the representation requires to store weight vectors for a given number of map nodes, wherein a weight vector has as many components as the information items. The number of map nodes typically needs to be substantially larger than the number of information items of the set, so that information items only rarely are mapped to the same map node. For such a representation a large amount of storage capacity is required.

An essential feature of the inventive method is to provide for each component of the information items of the set an associated function which substitutes the respective weights of an arbitrary number of map nodes of a prior art SOM. The representation of the set of information items according to the invention therefore only needs to store the parameters of a function for each component of the information items. The necessary storage capacity is thereby greatly reduced.

It is noted that a trained map with advantage is utilized to map new information items into the map, wherein the matching position within the map is correlated to the set of information items which was used for training the map.

Of course, the training set of information items can be extended after an initial training phase by any further provided information item, thereby providing an ongoing training of the map, i.e. the M functions.

The M initial functions preferably have the form

$$\delta_j(x) = -a_j \cdot \varphi(fp_j, x) + b_j \quad \text{with} \quad j \in \{1, 2, ..., M\} \, ,$$

where

$a_j, b_j$ : constants with $a_j > 0$ and $b_j > 0$,

$x = (x^1, .., x^N)$ : a point in the N-dimensional map,

$fp_j = (fp_j^1, .., fp_j^N)$ : the point in the N-dimensional map where $\delta_j$ is maximal, and where

$$\varphi(fp_j, x) = \sqrt{\sum_{i=1}^{N} (fp_j^i - x^i)^2} \; .$$

This form of the M initial functions is identical to equation (1) as given above. The step of adapting the functions preferably comprises the step of changing the positions of the maxima $fp_j$ of the M functions. Since at the position of the maximum of one of the M functions the respective component of the multi-dimensional vectors, which typically is associated with a certain feature of the respective information items, is most strongly represented, in the following the maxima $fp_j$ also are referred to as feature points of the respective functions.

Defining the initial positions of the feature points can be done in many different ways. In selected preferred examples the positions of the maxima $fp_j$ of the M initial functions are selected to be identical, or are selected randomly, or are selected to be located essentially on the border of a symmetric N-dimensional geometric shape, as for instance a circle in a 2-dimenaional map.

The changed position of a maximum preferably is calculated by

$$*fp_j^i = fp_j^i + \left(bmp^i - fp_j^i\right) \cdot \varepsilon_1 \qquad\qquad (4)$$

$$\forall \, i \in \{1, ..., N\}; j \in \{1, 2, ..., M\} \quad ,$$

where

$fp_j = (fp_j^1, .., fp_j^N)$ : old position of the maximum,

$*fp_j = (*fp_j^1, .., *fp_j^N)$ : new position of the maximum,

$bmp = \{bmp^1, ..., bmp^N\}$ : matching position of the information item, and

$\varepsilon_1$ : a pre-defined constant.

Thereby the feature points are drawn towards the matching position of the respective information item. Typically the influence $\varepsilon_1$ is small, in particular is $\varepsilon_1 \leq 0.1$, in particular $\varepsilon_1 \leq 0.01$. When $\varepsilon_1$ is a constant, the influence on a feature point is larger, the larger its distance to the matching position. This effect might not be desired and can be compensated by utilizing a variable value for $\varepsilon_1$. Accordingly, in a preferred refinements $\varepsilon_1$ is dependent on the topological distance between $fp_j$ and $bmp$. Furthermore, it can be of advantage for $\varepsilon_1$ to decrease with time.

A further variant for adapting the M functions is to alter the function value of the respective maximum, which can be done by changing the respective constant $b_j$. A preferred way to alter this constant is to calculate a new constant value using

$$*b_j = \begin{cases} b_j \cdot (1 + \varepsilon_2) & \text{for } hv_j > b_j \\ b_j \cdot (1 - \varepsilon_2) & \text{for } hv_j \leq b_j \end{cases} \, , \qquad\qquad (5)$$

where

$b_j$ :     old constant value,

$*b_j$ :     new constant value,

$hv_j$ :     highest output of the respective one of the M functions for any one matching position of an information items of said set of information items, and

$\varepsilon_2$ :     a pre-defined constant.

Also the influence $\varepsilon_2$ typically is small, in particular is $\varepsilon_2 \leq 0.1$, in particular $\varepsilon_2 \leq 0.01$.

Still a further variant of adapting the M functions is to change the respective value of $a_j$, thereby adapting the functions gradient.

In a further advantageous embodiment of the invention also inhibiting feature points can be provided. These feature points mark points of absence of a feature close to the exhibit feature point.

A typical purpose of the inventive method is to process high-dimensional data in order to visualize it on a two-dimensional screen. Accordingly, N preferably equals 2 resulting in a 2-dimensional map represented by M functions. Also the method preferably comprises the step of visualizing the matching position of the at least one information item by displaying the matching position on a two-dimensional screen, wherein said screen represents the 2-dimensioanl map. Although two dimensions are typically preferred for the map, depending on the application also maps with higher dimensions can be utilized with advantage.

There are numerous applications for the method described above, comprising essentially all applications in which a SOM is already utilized today, expanded by additional applications which are accessible due to the reduced need for storage capacity and increased training speed provided by the inventive method.

In the inventive method each information item is a representation of a process state of an automated industrial process, wherein the M components of the multi-dimensional information item are values of pre-defined process parameters, and wherein by mapping said information item into said N-dimensional map an anomalous process state is detected.

The method advantageously comprises the step of defining at least one region within said N-dimensional map, wherein an anomalous process state is detected by detecting an information item which is mapped to a position outside said at least one region.

In an exemplary method each information item is a representation of a digital text document, wherein the M components of the multi-dimensional information item are frequencies of occurrence of pre-defined words or word stems, and wherein by mapping said information item into said N-dimensional map text documents of similar content are detected. Of course, this exemplary method is not limited to text documents, but can be applied in a similar way to any other type of information items comprising any kind of meta-data, as for instance video, image or personal data, or any other meta-data which can be represented by a multi-dimensional vector.

An inventive process control system for detecting anomalous behavior of a machine or automation system which executes a pre-defined process, comprises means for determining a plurality of different process parameters, means for providing a multi-dimensional process vector with M components, wherein each of said M components corresponds to a respective one of said process parameters, means for mapping said process vector into an N-dimensional map which is adapted to perform a method as described above, and a display for visualizing the position of the mapped process vector within the N-dimensional map.

The process control system with advantage further comprises means for automatically detecting an anomalous process state by detecting a process vector which is mapped to a position which lies outside of at least one pre-defined region within the N-dimensional map. In this embodiment the display could even be omitted.

An exemplary information retrieval system comprises means for accessing a plurality of text documents, means for selecting or providing a specific text document, and means for determining text documents which are similar to said specific text document from said plurality of text documents, wherein said means is adapted to perform a method as described above. The means for determining text documents preferably is adapted to detect similar text documents depending on a pre-defined similarity threshold. As described above, a retrieval system for searching in any kind of meta-data, as for instance video, image or personal data also is an example.

Also the use of a method as described above for anomaly detection, and/or pattern recognition, and/or vector quantization, and/or image analysis, and/or data mining, and/or speech recognition, and/or signal processing, and/or electronic-circuit design, and/or robotics is an example.

The invention further proposes a digital storage medium, comprising electronically readable control instructions adapted to execute, when inserted in a computer, a method as described above.

Brief Description of the Figures

It is shown in

Fig. 1     schematically the principle configuration of a SOM-type neural network,

Fig. 2     schematically map units of a SOM with associated weight vectors having the same number of components as an input vector,

Fig. 3     schematically the weights of the weight vectors of Fig. 2 for different components,

Fig. 4a    exemplary feature points associated with respective functions representing a virtual SOM,

Fig. 4b    a virtual map unit computed to be the best matching position for an input vector in the virtual SOM of Fig. 4a,

Fig. 5     schematically the display of an exemplar embodiment of an inventive process control system,

Fig. 6     schematically the display of an exemplar embodiment of an exemplary information retrieval system,

Fig. 7     a diagram of the training time depending on the number of map units for an exemplar embodiment of the inventive method as compared to prior art,

Fig. 8     a diagram of the training time depending on the number of features of the information items for an exemplar embodiment of the inventive method as compared to prior art, and

Fig. 9     for an exemplary set of information items the features points associated with the functions which represent the corresponding trained virtual SOM together with the matching positions of the information items.

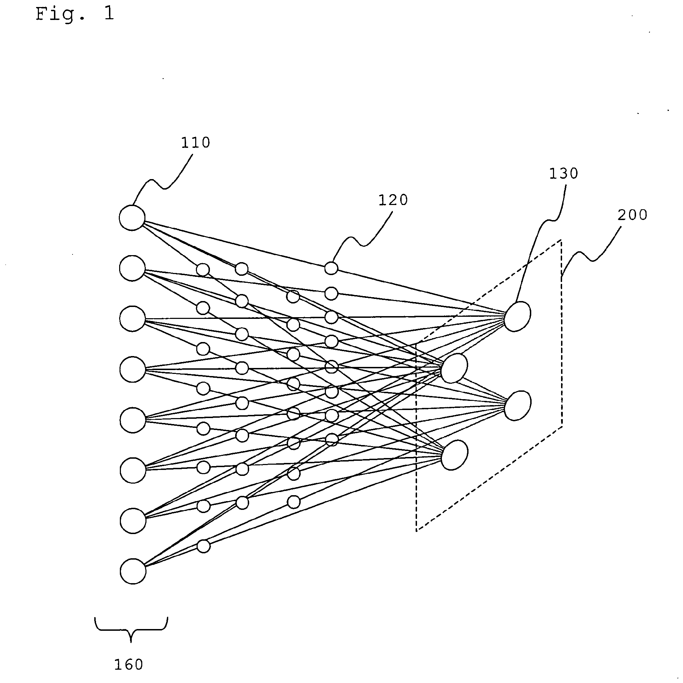

A principle configuration of a SOM-type neural network is shown schematically in Fig. 1. As input a multi-dimensional input vector 160 is provided with a plurality of components 110. Each component 110 forms an input node which is connected with each of a number of map nodes 130 arranged in a grid-structure within a two-dimensional map 200. Each connection between an input node 110 and a map node 130 is associated with a respective weight 120.

During a training phase typically the weights 120 are trained by presenting information items with a pre-defined number of feature values to the input nodes 110, wherein the number of feature values matches the number of input nodes 110. A winning map node is determined by calculating the Euclidian distance between the feature values and the respective weights 120, wherein the map node 130 with the smallest distance to the feature values is the winner. The training is achieved by moving the weights of the winning map node 130, and preferably also neighboring map nodes 130, closer to the feature values presented at the input nodes 110.

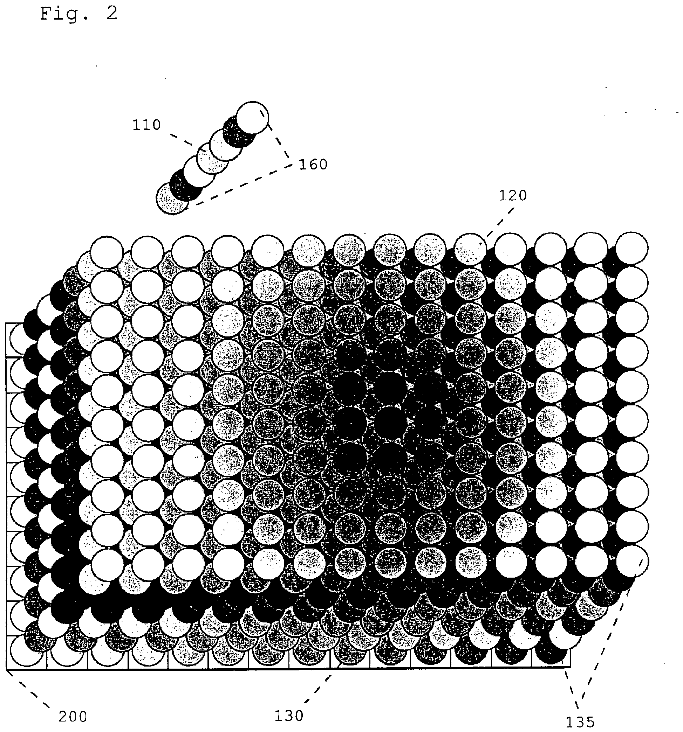

The weights 120 associated with map nodes 130 of a SOM are shown in a different way in Fig. 2. The weights 120 are depicted as parts of weight vectors 135 which form map nodes or map units 130 of the map 200. These weight vectors 135 are prototypes for incoming input vectors 160 and have the same structure. Each element or component 110 in an input vector 160 represents a feature which is represented in each map unit's weight vector 135. In Fig. 2 an already trained map 200 is shown.

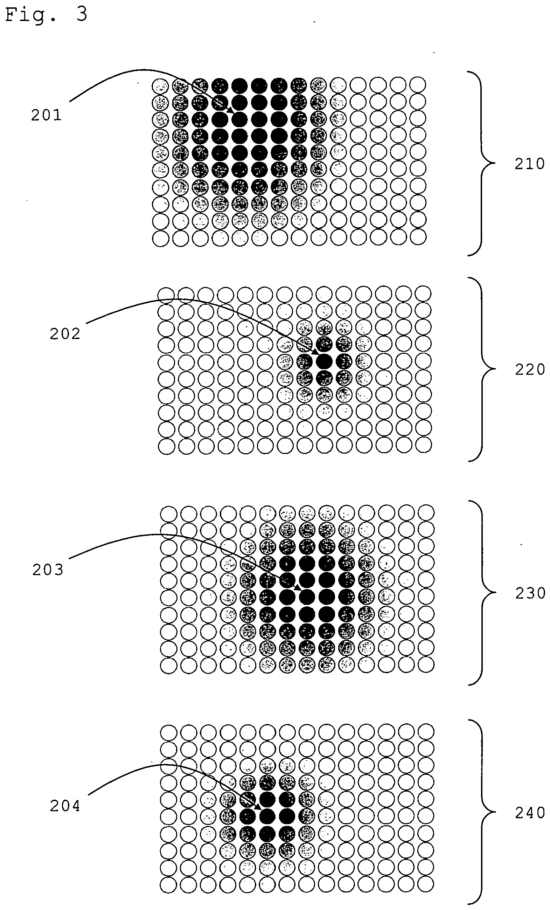

Same elements in the weight vectors 135 can be regarded as single maps, exemplary shown in Fig. 3 as maps 210, 220, 230 and 240. Each of these maps 210, 220, 230 and 240 represents one single feature. The inventors found that there is often a point 201-204 which can be seen as the point of highest weight, where the feature is most distinct. Looking from this point 201-204, the weights 120 decrease.

Each of these feature maps 210, 220, 230 and 240 can be described approximately and mathematically by considering the top 201-204 and the decreasing neighborhood. The original falloff may be unsteady, but in general the change of height from top 201-204 to the neighborhood can be expressed by a function, the results of which depend on the distance to the top 201-204.

In the following this top point 201-204 is termed feature point and the surrounding function is termed falloff function.

Describing every feature map 210, 220, 230 and 240 with one feature point 201-204 and its falloff function typically does not result in an exact representation of the SOM, but a sketch of the most necessary information which was carried. It is possible to determine each weight 120 at any point of the map 200 by using the falloff function with the distance to each feature point 201-204. Hence there results the advantage that the map units 130 with their weights 120 are not needed anymore. It is not even necessary to keep the lattice structure. The best matching unit (BMU) can be a best matching position and two input vectors 160 will never be mapped to the same position unless they are equal.

Describing a SOM in this way saves memory which originally was needed for storing the weight vectors 135. Most preferably the described functional representation is utilized from the beginning for training a SOM. When training a SOM with initially random weight vectors 135, typically some time is needed for the SOM to become stable.

If it is known from the start that there will be a point 201-204 of highest value for each feature with a decreasing neighborhood, there is no need to wait for that SOM to become stable.

Starting with feature points 201-204 for each feature, training preferably comprises pushing or pulling these feature points 201-204 corresponding to the need of a current input vector 160. With advantage also the parameters of the falloff function are adjusted. Advantageously, adjusting the feature points 201-204 requires less processing time than adjusting each weight 120 in each weight vector 135, when big SOMs are used.

In the following an exemplar embodiment of the inventive method utilizing a two-dimensional map is described.

In a first step the feature points and falloff functions of the VSOM are initialized for each feature of the information items to be mapped. Setting the position of the feature points can for instance be done in one of the following ways:

- All feature points get random positions.
- All feature points start in a centered position.
- All feature points form a circle which causes most of the input vectors to be mapped inside at the beginning.

An exemplar form of the falloff function given above by equation (1) can for instance be

$$\delta(\text{distance}) = -0.8 \times \text{distance} + \text{top} \qquad (1')$$

where the parameter distance is the topological distance calculated with the Pythagoras given by

$$\text{distance} = \varphi(\text{p1}, \text{p2}) = \sqrt{(\text{p1}_x - \text{p2}_x)^2 + (\text{p1}_y - \text{p2}_y)^2} \qquad (2')$$

where p1 is the position of the feature point and p2 the position, for which the weight is to be determined. The parameter top represents the highest value of the respective feature in the whole input vector set.

In a second step the SOM is trained by presenting the information items of a training set, i.e. the corresponding input vectors to the VSOM. For each input vector the best matching virtual map unit (BMU) is determined, which is the position on the map, influenced by all feature points, which has the closest distance to the given input vector.

The distance is determined by the Euclidean distance between the input vector and the VMU. The feature values at this point corresponding to the elements in the input vector will be computed by using

$$\gamma(\text{mu}, \text{iv}) = \sqrt{\sum_{j=1}^{M} \left( \text{iv}_j - \delta_j(\text{mu}) \right)^2} \qquad (3)$$

as already given above with the falloff function $\delta$ given by equation (1').

The virtual map unit mu in equation (3) can be a reference point anywhere on the map. The choice of the candidate for being BMU is important for the training time, because the computation of equation (3) requires more time than a simple determination of the Euclidean distance.

The map is sampled as if there were map units and the result of equation (3) is calculated for each VMU and the respective input vector. The position of the VMU which is closest of all to the input vector is determined to be the best matching position. For speeding up the process of finding the best matching position the above described quadtree and neighborhood search can be utilized.

Alternatively to sampling the map and making calculations for an accordingly big number of VMUs, the grid-structure can preferably be omitted and the object of determining the minimum of equation (3) be achieved analytically.

After having determined the best matching virtual map unit (BMU) for the respective input vector, the falloff functions are adapted depending on the input vector and its determined BMU.

For each feature the representation by the falloff function at the best matching position is determined and compared with the feature value of the input vector. If the feature value is over-represented, the feature point is pushed away, otherwise the feature point is pulled up. The new position of the feature point depends on the distance of the best matching position and is calculated with equation (4) $\forall i \in \{x, y\}$ :

$$*\text{fp}_j^i = \text{fp}_j^i + \left( \text{bmp}^i - \text{fp}_j^i \right) \cdot \varepsilon_1 \qquad (4)$$

as already given above, wherein $\text{bmp}^i$ is the x or y value of the best matching position. $\varepsilon_1$ can be a constant, for instance 0.01, can be dependent on the topological distance between $\text{fp}_j$ and bmp, or it can decrease with time, thereby reducing the influence the further the training progresses.

In order to pull the input values closer to the weights with advantage also the top value of each falloff function can be lowered or raised. A side effect of this option is that the feature point will be among the input values and can be used for.labeling a specific area.

For this purpose each input vector is mapped to a VMU and the highest representation of each feature of all VMUs is determined. Then the top value of the falloff function (1') is adjusted in the following way:

$$* \text{top}_j = \begin{cases} \text{top}_j \cdot 1.01 \text{ for highest\_value}_j > \text{top}_j \\ \text{top}_j \cdot 0.99 \text{ for highest\_value}_j \leq \text{top}_j \end{cases} \tag{5'}$$

where $*\text{top}_j$ is the new value for the $\text{top}_j$ value and $\text{highest\_value}_j$ is the highest needed representation of the respective feature among all input vectors. The influence given by the exemplary factors 1.01 and 0.99 ensures that the $\text{top}_j$ value is raised or lowered with every adjusting step if necessary.

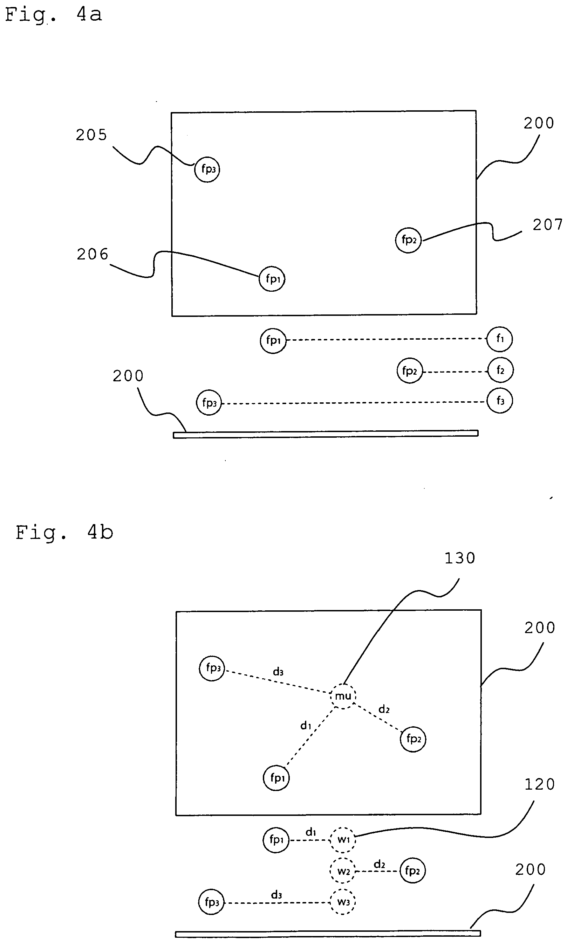

In Figs. 4a and 4b the schematic structure of a VSOM 200 is depicted, showing a top view in the upper part and a side view in the lower part. In the shown embodiment the VSOM 200 is adapted to be trained using three-dimensional vectors. For each dimension or feature an associated feature point 205-207 can be found on the map 200. While training, these feature points 205-207 will move on the map 200 and will change the representation of their features at each virtual map unit 130. This representation is computed on the fly as is shown in Fig. 4b. Depending on the distance $d_i$ and the falloff function associated with the feature points $\text{fp}_i$ 205-207, the associated weight $w_i$ 120 is calculated.

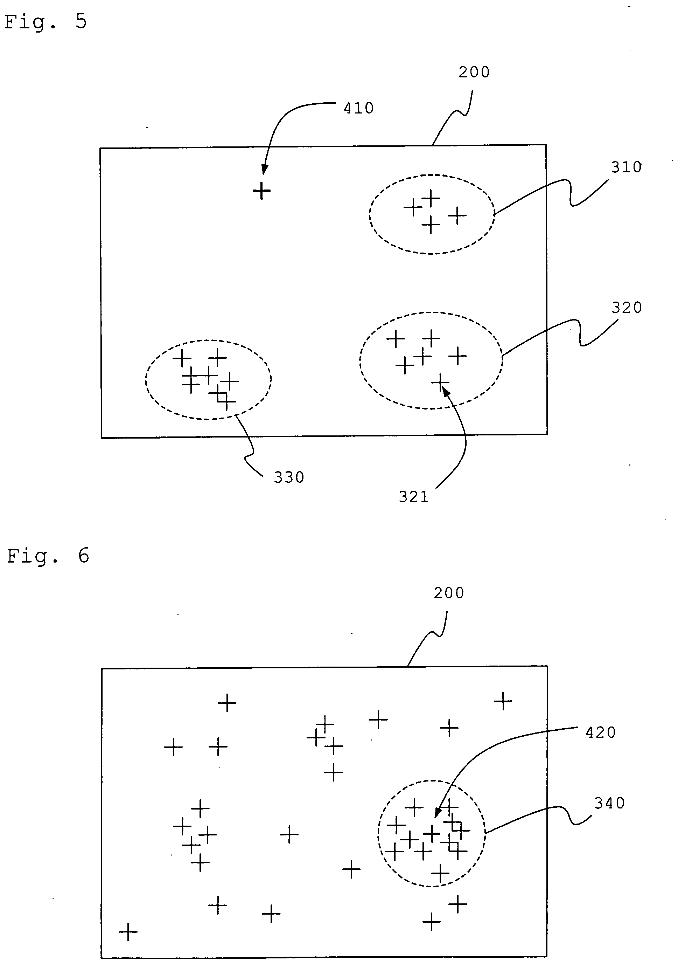

In Fig. 5 schematically the display of an exemplar embodiment of an inventive process control system is shown. At pre-defined times the process state of a machine, an automation system or a production plant is determined by measuring a plurality of pre-defined process parameters, as for instance temperatures, pressures, motor speeds or open/close-states of valves.

Since for a great number of measured process parameters it can be difficult to decide for an operator whether the machine or system is in a normal or an anomalous state, the process states are mapped into a two-dimensional map using the method described above. The process parameters therein form the components of a respective input vector.

That way the process states can be displayed in a simple way on a custom computer monitor. Process states determined at different times are depicted as crosses 321 in Fig. 5. Since by using the inventive method similar process states are mapped to similar positions, certain areas 310, 320 and 330 can be defined which are associated with a normal process state. In a very easy and convenient way the operator can detect an anomalous process state by detecting a process state 410 which lies outside these defined areas. The operator can now take the necessary steps without delay. From the position of the anomalous process state 410 within the map also the type of anomalous behavior could be derived.

A further example is an information retrieval system, which is schematically shown in Fig. 6. In this example text documents are mapped into a two-dimensional map 200 allowing the display on a monitor screen. A plurality of text documents are analyzed with respect to the frequency of occurrence of pre-defined words or word stems, the respective frequencies forming the components of input vectors. These input vectors are mapped into the two-dimensional map using a method as described above and displayed on the computer screen. The mapped positions of a plurality of documents are depicted as crosses in Fig. 6.

If a certain document 420 is selected or provided by a user, other documents can be found which are similar in content to this certain document 420, since similar input vectors are mapped to similar positions within the map. The similar text documents can also be determined automatically without displaying the map positions. For this purpose preferably a similarity threshold 340 is defined or selected by the user to adjust the number of resulting similar text documents.

In the following evaluation results are given for comparing the original SOM algorithm by Kohonen with the method described herein. In particular the aspects of memory usage and training time are evaluated.

For the original SOM, the space in memory is used for carrying the weights. The more weights, the more space is needed in memory, which is a limited resource. Training time is important and it usually depends on several values like number of features and number of map units. With increasing numbers of features or map units the training time will increase.

With virtual map units it is possible to determine a weight vector at any point of the map. Hence there is a potentially unlimited amount of map units. The only necessary data for determination of the weights are the feature points and their falloff functions. So in general the size of the VSOM is calculated by

$$S_{VSOM} = n_f \times S(\text{fp}) \times S(\delta) \tag{6}$$
$$= n_f \times (\approx 100 \text{ byte})$$

with

$S_{VSOM}$    : Size of VSOM

$n_f$ : Number of features
$S(fp)$ : Size of feature point
$S(\delta)$ : Size of falloff function

The sizes of the feature points and the falloff function highly depends on the implementation. The size of $\approx 100$ byte is taken from an implemented prototype. But more important is, that the size depends on just one factor, the number of features $n_f$.

For the original SOM, there is a simple function for the determination of the size which will be needed in memory. The size depends on the number of map units and the number of features. The number of needed weights is calculated with:

$$n_w = n_{mu} \times n_f \qquad (7)$$

with

$n_w$ : Number of weights
$n_{mu}$ : Number of map units
$n_f$ : Number of features

With (7) and the need for real values for representing the weights which usually need 8 bytes, the equation (8) follows:

$$
\begin{aligned}
S_{SOM} &= n_w \times 8 / (1024 \times 1024) \text{ Mb} \\
&= n_w / (128 \times 1024) \text{ Mb} \qquad (8) \\
&= n_w / 131072 \text{ Mb}
\end{aligned}
$$

It shows that the size of the original SOM depends on the number of map units and the number of features, while the VSOM's size just depends on the number of features. To determine when the VSOM needs less memory than the original SOM, we use the following relation:

$$
\begin{aligned}
S_{SOM} &> S_{VSOM} \\
\Leftrightarrow \quad n_w \times 8 \text{ byte} &> n_f \times 100 \text{ byte} \\
\Leftrightarrow \quad n_w &> n_f \times 12.5 \\
\Leftrightarrow \quad n_{mu} \times n_f &> n_f \times 12.5 \\
\Leftrightarrow \quad n_{mu} &> 12.5 \qquad (9)
\end{aligned}
$$

Hence there is an improvement for the memory use when at least 13 map units should be used in the original SOM.

Next the training time of a usual SOM and the VSOM described herein is compared and the training time of a VSOM and a SOM, where both algorithms are improved with a winner search as described above. For comparison the evaluations are focusing on different numbers of map units and different numbers of features.

Without modifications training time of a VSOM is higher than for an original SOM, because the weight vectors have to be computed instead of just being used. This loss depends on the number of features and the size of the map. Both algorithm's training times depend on the number of features and number of vectors. If the number of features or the number of vectors increases, the training time will increase accordingly.

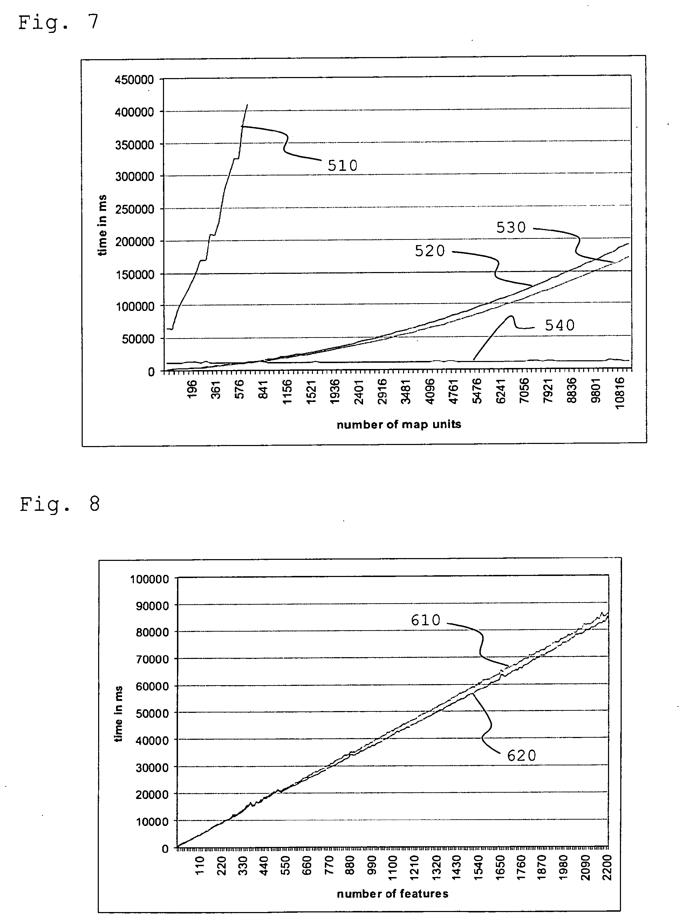

But on the other hand for the VSOM there is the profit of not needing to adjust each map unit's weight, which is done in the original algorithm. In Fig. 7 the training time depending on the number of map units is shown for a VSOM utilizing a fixed lattice 510, an original SOM 520, an original SOM utilizing a winner search 530, and a VSOM utilizing a winner search and therefore not utilizing a lattice 540. The data shown in Fig. 7 was determined using 300 features, 900 input vectors and 10 iterations.

It can bee seen from Fig. 7 that without applying a winner search the profit of not needing to adjust each map unit's weight does not overweigh the loss of calculating the weights. Hence, to best use this benefit the number of calculated weights needs to be minimized by using the proposed solution of a winner search described above. When there are at least approximately 750 map units, as is the case for instance for a 27x27 map, the improved algorithm of a VSOM as described herein is faster than the original one known form the prior art.

Because 750 map units are the ripple point, as can be seen in Fig. 7, where the SOM and the VSOM approximately have the same training time, such a map of 27x27 was used for comparing the training time in dependence of the number of features. Fig. 7 shows that both algorithms which were improved in its winner search had similar training time. Hence there is no drawback with respect to training time with an increasing number of features.

It is noted that the number of iterations is limited to 10. Presenting the input data ten times is barely enough for the original SOM becoming stable. This number was just taken for comparing the training time per iteration.

To some extend the approach proposed herein is similar to swarm behavior. There are two different groups of individuals which have to cooperate to form a swarm intelligence. The group of feature points, i.e. the maxima of the M functions, depends on the group of input data and vice versa. While training each individual makes single steps to reach a better position. It is conceivable that in the field of swarm intelligence research improving features for the proposed algorithm can be found.

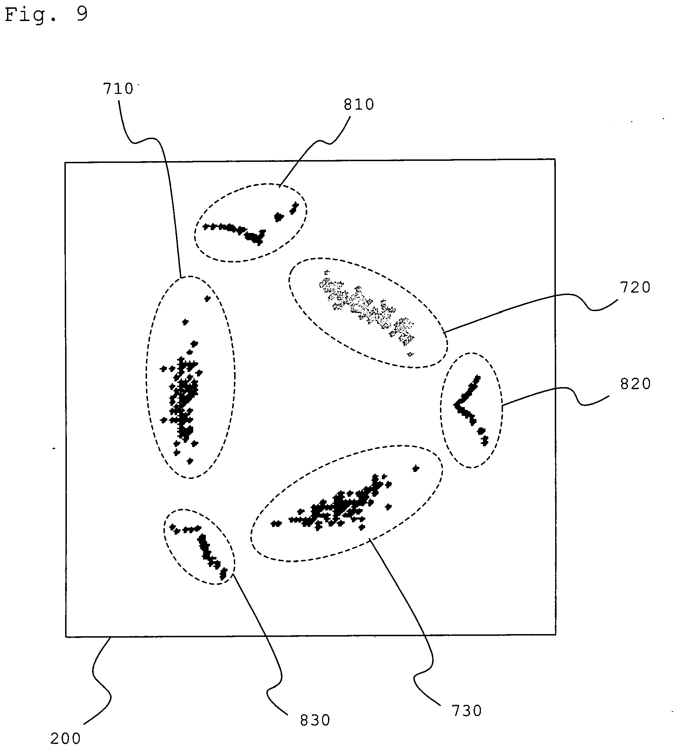

Furthermore, in certain applications the building of synonym pairs can be observed, wherein similar input vectors build clusters and similar feature points are close to each other as well. In Fig. 9 a trained VSOM is shown which was trained with three groups of vectors 710, 720 and 730. The groups 810, 820 and 830 which represent the feature points have been separated into three groups too, because they had influence from the input vectors. Feature points which are close together because they are synonyms can be combined to one feature point to save even more memory.

Therefore, in order to even further reduce the storage capacity necessary for storing the functional parameters of the M functions, at least two of the functions with advantage can be replaced with a single function, if it is determined that the at least two functions are very similar.

There are several known improvements of the known SOM algorithm which are also applicable to the method described herein. These improvements are described in the following. The SOM algorithm offers three major points of interests for improvement: Speeding up the search for the best matching unit, shorten training time and reducing the use of memory.

The advantage of SOM over other types of artificial neural networks is their unsupervised aspect of not depending on knowing the input space. In spite of its high popularity, SOM encounters several drawbacks, such as being computationally expensive, needing much learning time, being memory lavishing, and searching slowly. These disadvantages have motivated the development of various improvements, each having its own advantages and disadvantages.

One of the first revisions of the original algorithm was the hierarchical SOM (HSOM), described for instance in "Internet categorization and search: a self-organizing approach" by Chen, H., Schuffels, C., Orwig, R., Journal of Visual Communication and Image Representation, 7(1), 1996, pages 88-102. HSOM differs from the original SOM algorithm in just one step, in that when there are more vectors mapped to a map unit after training than defined, these vectors are taken to train a new SOM. This helps being faster, because vectors do not have to be presented to all existing map units of the whole SOM during training. Being hierarchically can be seen as an additional feature which improves every SOM. Nevertheless, a new parameter, determining the threshold of creating a child SOM, typically is defined.

Instead of growing hierarchically, Growing Grid SOM (GGSOM) grows by width and height. This grid is initialized with the size of 2 x 2. After some training iterations, two map units are searched: the most important unit and its neighboring least important unit. Then a row or column between these units, depending on their topological relation, is inserted. This impürovement is described for instance in "Growing grid-a self-organizing network with constant neighbourhood range and adaptation strength" by Fritzke, B., Neural Processing Letters, 2(5), 1995, pages 9-13. In that way, the size of the SOM needs not to be predefined, however the map might grow unshapely which is a disadvantage for the visualization.

Making the Growing Grid SOM hierarchical is in general the idea of the Growing Hierarchical Self-Organizing Map (GHSOM), which is a hybrid of HSOM and GGSOM and is for instance described in "Uncovering the hierarchical structure of text archives by using an unsupervised neural network with adaptive architecture" by Merkl, D., Rauber, A., in: Knowledge Discovery and Data Mining, proceedings, 2000, pages 384-395. While GHSOM manages to speed up training, it inherits the disadvantage of GGSOM concerning its limited visualization.

The Growing Neural Gas (GNG) can be seen as a generalization of the SOM and is described for instance in "Unsupervised clustering with growing cell structures" by Fritzke, B., in: Proc. IJCNN'91, International Joint Conference on Neural Networks, Volume 2., Piscataway, NJ, IEEE Service Center, 1991, pages 531-536. In the growing cell structure of the GNG, cells are similar to map units. They are created or pruned in dependence of their need to the neural net. The known grid neighborhood relationship is abolished and a free structure is introduced. This leads to the lack of being able to visualize the structure properly. However, the main advantage is that only needed map units are kept in memory and are used for computation.

Like GHSOM is a hierarchical GGSOM, there is a hierarchical GNG. The Dynamic Adaptive Self-Organizing Hybrid Model (DASH) is a GNG, which expands hierarchically if there are too many data items mapped to one node.

So the advantages of the GHSOM arise, which means that GNGs of deeper levels do not have to be trained with the whole data item collection.

The Scalable Self-Organizing Map (SSOM) improves the original SOM whenever the representing vectors are very sparse. Whenever these vectors contain only a few non-zero elements, this solution will speed up the updating of weight vectors and the computation of distances enormously. The algorithm for this feature is based on the original algorithm of Kohonen and delivers the same results. It was mathematically transformed to ignore zero elements and takes almost $O(S)$ time instead of $O(S^2)$, where S is the size of the collection. This improvement is described for instance in "A scalable self-organizing map algorithm for textual classification: a neural network approach to thesaurus generation" by Roussinov, D.G., Chen, H., CC-AI, The Journal for the Integrated Study of Artificial Intelligence, 15(1-2), 1998, pages 81-111.

The original SOM algorithm can be converted very easily to a torus SOM by connecting the opposite edges of the map as is described for instance in "The characteristics of the torus self-organizing map" by Ito, M., Miyoshi, T., Masuyama, H., in: 6 th International COnference on Soft Computing, IIZUKA2000, Iizuka, Fukuoka, Japan, October 1-4, 2000, pages 239-44. Thus the size of the neighborhood of each map unit is the same and mapping to the corners of the map will be avoided. In that way one can guarantee that clustering was not caused by a smaller neighborhood in the corners. Because this feature has no real drawback it should always be applied when using SOM.

For a smarter search within the map along with faster training, the search can be improved by starting at the point of the SOM where the best matching unit (BMU) will most likely be mapped. This fast winner search looks in the neighborhood of the old BMU to find the new one. The fast winner search is described for instance in "Fast winner search for som-based monitoring and retrieval of high-dimensional data" by Kaski, S, in: IEE Conference Publication, Volume 2, 1999, pages 940-945, or in "WEBSOM-self-organizing maps of document collections" by Honkela, T., Kaski, S., Lagus, K., Kohonen, T., in: Proceedings of WSOM'97, Workshop on Self-Organizing Maps, Espoo, Finland, June 4-6, Helsinki University of Technology, Neural Networks Research Centre, Espoo, Finland, 1997, pages 310-315. Note that when using a torus SOM, the neighborhood around the BMU does not end on the edge of the map.

From the above it can be seen that in the past the SOM algorithm was improved several times. Some of these improvements focused on the number of map units while other refined parts to be faster under special conditions. The solutions with less map units lacked the ability of a good visualization and showed minor quality with the representation of the input space. The invention introduces a virtual SOM (VSOM) which is free of real map units while preserving the known characteristics of the original algorithm and some of its improvements. Hence the presented approach needs just a fraction of memory in comparison with known SOM algorithms. This advantage allows to handle representations of very high-dimensional vector spaces which are needed in many applications.

**Claims**

1. A computer-implemented method for processing digital information in which information items (160) are mapped into an N-dimensional map (200) such that similar information items (160) map to similar positions within the map (200), comprising the steps of

   - providing at least one information item (160) and
   - mapping said information item (160) into said N-dimensional map (200) by determining a matching position (150) within the map (200) for the information item (160), wherein
   - each information item (160) is represented by a multi-dimensional vector with M components (110),' **characterized in that**
   - the N-dimensional map (200) is represented by a set of M functions of the map position,
   - each of said M functions is associated with a respective one of the M vector components (110) of the information item (160), and
   - each of said M functions has a maximum (201-207) at one point of the N-dimensional map (200), wherein the respective function is monotonically decreasing from said maximum (201-207) in any direction along the N-dimensional map (200), wherein each information item (160) is a representation of a process state of an automated industrial process, wherein the M components (110) of the multi-dimensional information item (160) are values of pre-defined process parameters, and wherein by mapping said information item to a particular position in said N-dimensional map (200) an anomalous process state is detected.

2. The method of claim 1, wherein each of said M functions has the form

$$\delta_j(x) = -a_j \cdot \varphi(fp_j, x) + b_j \quad \text{with} \quad j \in \{1, 2, ..., M\},$$

where

$a_j, b_j$ : constants with $a_j > 0$ and $b_j > 0$,
$x = (x^1, .., x^N)$ : a point in the N-dimensional map,

$$fp_j = (fp_j^1, .., fp_j^N) \quad : \quad \text{the point in the N-dimensional map where } \delta_j \text{ is maximal, and where}$$

$$\varphi(fp_j, x) = \sqrt{\sum_{i=1}^{N} (fp_j^i - x^i)^2} .$$

3. The method of any one of the preceding claims, wherein the step of determining the matching position (150) for the information item (160) comprises the steps of

- defining an array of map nodes (130) with each node having a different map position,
- calculating for each map node (130) of at least a subset of said array a corresponding multi-dimensional node vector (135) with M components (120), the components of which are determined by calculating the output of the respective of said M functions for the map position of the respective map node (130), and
- determining the multi-dimensional node vector (135) which best matches the information item (160), and
- selecting for the matching position (150) for the information item (160) the position of the map node (130) which corresponds to the multi-dimensional node vector (135) which was determined to best match the information item (160).

4. The method of any one of the preceding claims, wherein the step of determining the matching position (150) for the information item (160) comprises the steps of

a) selecting a search region within the N-dimensional map (200),
b) dividing the search region into a pre-defined number of subregions,
c) defining a map node (130) within each of said subregions,
d) determining the subregion which best matches the information item (160) by

- calculating for each of the defined map nodes (130) a corresponding multi-dimensional node vector (135) with M components (120), the components of which are determined by calculating the output of the respective of said M functions for the respective map position, and
- determining the multi-dimensional node vector (135) which best matches the information item (160),

e) repeating steps b) through d) for a pre-defined number of recursions with the respective determined subregion as search region for the following recursion, and
f) selecting for the matching position for the information item a position within the subregion which best matches the information item (160).

5. The method of claim 4, wherein the step of determining the matching position (150) for the information item (160) is performed repeatedly and wherein in step a) the search region is selected such that the position of the respective previously determined matching position is the center of the search region.

6. The method of any one of claims 3 to 5, wherein the step of determining the multi-dimensional node vector (135) which best matches the information item (160) comprises determining the node vector (135) for which a selected distance measure, in particular the Euclidian distance, to the information item (160) is minimal.

7. The method of any one of the preceding claims, wherein the step of determining the matching position (150) for the information item (160) comprises the step of calculating the map position where the function

$$\gamma(\mathrm{mu}, \mathrm{iv}) = \sqrt{\sum_{j=1}^{M} \left( \mathrm{iv}_j - \delta_j(\mathrm{mu}) \right)^2}$$

is minimal, where

mu = (mu$^1$,...,mu$^N$) : the map position in the N-dimensional map,
iv = (iv$_1$,...,iv$_M$) : the M-dimensional information item
$\delta_j$(mu) : the respective one of the M functions.

8. The method of any one of the preceding claims, comprising a training phase for generating the map (200) with the steps of

   a) defining an array of map nodes (130) with each node having a different map position,
   b) defining for each map node (130) an initial corresponding multi-dimensional weight vector (135) with M components (120),
   c) providing a set of information items (160),
   d) determining for an information item (160) of said set the best matching weight vector,
   e) changing the component values of the determined best matching weight vector to better match the component values of the information item (160),
   f) repeating steps d) and e) for all information items of said set, and
   g) determining the M functions for representing the map from said array of multi-dimensional weight vectors by fitting variable parameters of a given function to the respective component values of the weight vectors.

9. The method of claim 8, wherein in step e) also the component values of the weight vectors neighboring the determined best matching weight vector are changed to better match the information item (160), wherein the amount of change depends on the distance between the map nodes corresponding to the best matching weight vector and the respective neighboring weight vector.

10. The method of any one of the preceding claims, comprising a training phase for generating the map (200) with the steps of:

   a) providing M initial functions for representing the map (200),
   b) providing a set of information items (160),
   c) determining a matching position within the map for an information item (160) of said set,
   d) adapting the functions representing the map depending on the determined matching position and on the information item (160), and
   e) repeating steps c) and d) for all information items (160) of said set.

11. The method of claim 10, wherein each of said M initial functions has the form

$$\delta_j(x) = -a_j \cdot \varphi(\mathrm{fp}_j, x) + b_j \quad \text{with} \quad j \in \{1, 2, ..., M\},$$

where

a$_j$,b$_j$ : constants with $a_j > 0$ and b$_j$ > 0,
x = (x$^1$,..,x$^N$) : a point in the N-dimensional map,
$$\mathrm{fp}_j = (\mathrm{fp}_j^1, .., \mathrm{fp}_j^N)$$
: the point in the N-dimensional map where $\delta_j$ is maximal, and where

$$\varphi(\mathrm{fp}_j, x) = \sqrt{\sum_{i=1}^{N} (\mathrm{fp}_j^i - x^i)^2}.$$

**12.** The method of claim 11, wherein the step d) of adapting the M functions comprises the step of changing the positions of the maxima $fp_j$ of the M functions.

**13.** The method of claim 11 or 12, wherein the positions of the maxima $fp_j$ of the M initial functions

    - are selected to be identical, or
    - are selected randomly, or
    - are selected to be located essentially on the border of a symmetric N-dimensional geometric shape.

**14.** The method of claim 12 or 13, wherein the changed position of a maximum is calculated by

$$* fp_j^i = fp_j^i + \left(bmp^i - fp_j^i\right)\cdot \varepsilon_1$$

$$\forall\, i \in \left\{1, ..., N\right\}; j \in \left\{1, 2, ..., M\right\} \quad,$$

where

$$fp_j = (fp_j^1,..,fp_j^N) :$$ old position of the maximum,

$$* fp_j = (*fp_j^1,..,*fp_j^N) :$$ new position of the maximum,

$bmp = \{bmp^1,...,bmp^N\}$: matching position of the information item, and

$\varepsilon_1$ : a pre-defined constant.

**15.** The method of claim 14, wherein $\varepsilon_1 \leq 0.1$, in particular $\varepsilon_1 \leq 0.01$.

**16.** The method of any one of claims 11 to 15, wherein the step d) of adapting the M functions comprises the step of changing the respective constant $b_j$.

**17.** The method of claim 16, wherein the changed constant $b_j$ is calculated by

$$* b_j = \begin{cases} b_j \cdot \left(1 + \varepsilon_2\right) & \text{for } hv_j > b_j \\ b_j \cdot \left(1 - \varepsilon_2\right) & \text{for } hv_j \leq b_j \end{cases} \quad,$$

where

    $b_j$ : old constant value,
    $*b_j$ : new constant value,
    $hv_j$ : highest output of the respective one of the M functions for any one matching position of an information items of said set of information items, and
    $\varepsilon_2$ : a pre-defined constant.

**18.** The method of claim 17, wherein $\varepsilon_2 \leq 0.1$, in particular $\varepsilon_2 \leq 0.01$.

**19.** The method of any one of claims 11 to 18, wherein the step d) of adapting the M functions comprises the step of changing the respective constant $a_j$.

**20.** The method of any one of the preceding claims, wherein the value of each component (110) of said multi-dimensional vector describes a feature of the corresponding information item (160).

**21.** The method of any one of the preceding claims, wherein N equals 2.

**22.** The method of any one of the preceding claims, further comprising the step of visualizing the matching position of the at least one information item (160), wherein the matching position is shown within the N-dimensional map (200).

23. The method of any one of claims 1 to 22, comprising the step of defining at least one region (310, 320, 330) within said N-dimensional map (200), wherein an anomalous process state is detected by detecting an information item which is mapped to a position (410) outside said at least one region (310, 320, 330).

24. A system having mapping means, wherein said mapping means is adapted to perform a method according to any one of claims 1 to 23, and wherein said system is provided as a process control system for detecting anomalous behavior of a machine or automation system which executes a pre-defined process, comprising

   - means for determining a plurality of different process parameters, and
   - means for providing a multi-dimensional process vector with M components, wherein each of said M components corresponds to a respective one of said process parameters, and wherein the mapping means is adapted for mapping said process vector into an N-dimensional map (200), said system further comprising
   - a display for visualizing the position (321, 410) of the mapped process vector within the N-dimensional map (200).

25. The system of claim 24, comprising

   - means for automatically detecting an anomalous process state by detecting a process vector which is mapped to a position (410) which lies outside of at least one pre-defined region (310, 320, 330) within the N-dimensional map (200) .

26. Digital storage medium, comprising electronically readable control instructions, wherein said control instructions are adapted to perform, when executed by a computer, a method of any one of claims 1 to 23.

**Patentansprüche**

1. Computerimplementiertes Verfahren zum Verarbeiten von digitalen Informationen, bei dem Informationselemente (160) auf eine N-dimensionale Karte (200) abgebildet werden, so dass ähnliche Informationselemente (160) auf ähnliche Positionen in der Karte (200) abgebildet werden, mit folgenden Schritten:

   - Bereitstellen mindestens eines Informationselements (160) und
   - Abbilden des Informationselements (160) auf die N-dimensionale Karte (200) durch Bestimmen einer passenden Position (150) in der Karte (200) für das Informationselement (160), wobei
   - jedes Informationselement (160) durch einen mehrdimensionalen Vektor mit M Komponenten (110) repräsentiert wird,

   **dadurch gekennzeichnet, dass**

   - die N-dimensionale Karte (200) durch eine Menge aus M Funktionen der Kartenposition repräsentiert wird,
   - jede der M Funktionen einer jeweiligen der M Vektorkomponenten (110) des Informationselements (160) zugeordnet ist, und
   - jede der M Funktionen ein Maximum (201 - 207) an einem Punkt der N-dimensionalen Karte (200) aufweist, wobei die jeweilige Funktion von diesem Maximum (201 - 207) aus in jeder beliebigen Richtung auf der N-dimensionalen Karte (200) monoton fallend ist, wobei jedes Informationselement (160) einen Prozesszustand eines automatisierten industriellen Prozesses repräsentiert, wobei die M Komponenten (110) des mehrdimensionalen Informationselements (160) Werte von vorgegebenen Prozessparametern sind, und wobei durch das Abbilden des Informationselements auf eine bestimmte Position in der N-dimensionalen Karte (200) ein anormaler Prozesszustand erkannt wird.

2. Verfahren nach Anspruch 1, wobei jede der M Funktionen die folgende Form aufweist:

$$\delta_j(x) = -a_j \cdot \varphi\big(fp_j, x\big) + b_j \ \text{mit} \ j \in \{1,2,\dots,M\},$$

wobei

$a_j, b_j$ Konstanten sind, mit $a_j > 0$ und $b_j > 0$,

$x = (x^1,...,x^N)$ ein Punkt in der N-dimensionalen Karte ist,

$$fp_j = \left(fp_j^1, ..., fp_j^N\right)$$

der Punkt in der N-dimensionalen Karte ist, wo $\delta_j$ maximal ist, und wobei

$$\varphi(fp_j, x) = \sqrt{\sum_{i=1}^{N}\left(fp_j^i - x^i\right)^2} \text{ ist.}$$

**3.** Verfahren nach einem der vorhergehenden Ansprüche, wobei der Schritt des Bestimmens der passenden Position (150) für das Informationselement (160) die folgenden Schritte umfasst:

- Definieren einer Anordnung von Kartenknoten (130), wobei jeder Knoten eine andere Kartenposition aufweist,
- Berechnen, für jeden Kartenknoten (130) von zumindest einer Teilmenge der Anordnung, eines entsprechenden mehrdimensionalen Knotenvektors (135) mit M Komponenten (120), wobei dessen Komponenten durch Berechnen des Ergebnisses der jeweiligen Funktion der M Funktionen für die Kartenposition des jeweiligen Kartenknotens (130) bestimmt werden, und
- Bestimmen des mehrdimensionalen Knotenvektors (135), der am besten mit dem Informationselement (160) übereinstimmt, und
- Auswählen, als passende Position (150) für das Informationselement (160), der Position desjenigen Kartenknotens (130), der dem mehrdimensionalen Knotenvektor (135) entspricht, der als am besten mit dem Informationselement (160) übereinstimmend ermittelt wurde.

**4.** Verfahren nach einem der vorhergehenden Ansprüche, wobei der Schritt des Bestimmens der passenden Position (150) für das Informationselement (160) die folgenden Schritte umfasst:

a) Auswählen eines Suchbereichs in der N-dimensionalen Karte (200),
b) Unterteilen des Suchbereichs in eine vorgegebene Anzahl von Teilbereichen,
c) Definieren eines Kartenknotens (130) in jedem der Teilbereiche,
d) Bestimmen desjenigen Teilbereichs, der am besten mit dem Informationselement (160) übereinstimmt, durch

- Berechnen, für jeden der definierten Kartenknoten (130), eines entsprechenden mehrdimensionalen Knotenvektors (135) mit M Komponenten (120), dessen Komponenten durch Berechnen des Ergebnisses der jeweiligen Funktion der M Funktionen für die jeweilige Kartenposition bestimmt werden, und
- Bestimmen des mehrdimensionalen Knotenvektors (135), der am besten mit dem Informationselement (160) übereinstimmt,

e) Wiederholen der Schritte b) bis d) für eine vorgegebene Anzahl von Rekursionen mit dem jeweils bestimmten Teilbereich als Suchbereich für die folgende Rekursion, und
f) Auswählen, als passende Position für das Informationselement, einer Position in dem Teilbereich, die am besten mit dem Informationselement (160) übereinstimmt.

**5.** Verfahren nach Anspruch 4, wobei der Schritt des Bestimmens der passenden Position (150) für das Informationselement (160) wiederholt durchgeführt wird und wobei in Schritt a) der Suchbereich derart ausgewählt wird, dass die Position der jeweils zuvor ermittelten passenden Position der Mittelpunkt des Suchbereichs ist.

**6.** Verfahren nach einem der Ansprüche 3 bis 5, wobei der Schritt des Bestimmens des mehrdimensionalen Knotenvektors (135), der am besten mit dem Informationselement (160) übereinstimmt, das Ermitteln desjenigen Knotenvektors (135) umfasst, für den ein ausgewähltes Abstandsmaß, insbesondere der Euklidische Abstand, zu dem Informationselement (160) minimal ist.

**7.** Verfahren nach einem der vorhergehenden Ansprüche, wobei der Schritt des Bestimmens der passenden Position (150) für das Informationselement (160) den Schritt des Berechnens der Kartenposition umfasst, an der die Funktion

$$\gamma(mu, iv) = \sqrt{\sum_{j=1}^{M}\left(iv_j - \delta_j(mu)\right)^2}$$

minimal ist, wobei

$mu = (mu^1,...,mu^N)$ die Kartenposition in der N-dimensionalen Karte ist,
$iv = (iv_1,...,iv_M)$ das M-dimensionale Informationselement ist,
$\delta_j(mu)$ die jeweilige eine der M Funktionen ist.

8. Verfahren nach einem der vorhergehenden Ansprüche, umfassend eine Trainingsphase zum Erzeugen der Karte (200), mit folgenden Schritten:

a) Definieren einer Anordnung von Kartenknoten (130), wobei jeder Knoten eine unterschiedliche Kartenposition aufweist,
b) Definieren, für jeden Kartenknoten (130), eines anfänglichen entsprechenden mehrdimensionalen Gewichtsvektors (135) mit M Komponenten (120),
c) Bereitstellen einer Menge von Informationselementen (160),
d) Bestimmen, für ein Informationselement (160) der Menge, des bestpassenden Gewichtsvektors,
e) Ändern der Komponentenwerte des bestimmten bestpassenden Gewichtsvektors zur besseren Übereinstimmung mit den Komponentenwerten des Informationselements (160),
f) Wiederholen der Schritte d) und e) für alle Informationselemente der Menge und
g) Bestimmen der M Funktionen zur Repräsentation der Karte aus der Anordnung von mehrdimensionalen Gewichtsvektoren durch Anpassen variabler Parameter einer gegebenen Funktion an die jeweiligen Komponentenwerte der Gewichtsvektoren.

9. Verfahren nach Anspruch 8, wobei in Schritt e) auch die Komponentenwerte der Gewichtsvektoren, die dem ermittelten bestpassenden Gewichtsvektor benachbart sind, geändert werden, um besser mit dem Informationselement (160) übereinzustimmen, wobei das Ausmaß der Änderung von dem Abstand zwischen den Kartenknoten abhängt, die dem bestpassenden Gewichtsvektor und dem jeweils benachbarten Gewichtsvektor entsprechen.

10. Verfahren nach einem der vorhergehenden Ansprüche, umfassend eine Trainingsphase zum Erzeugen der Karte (200), mit folgenden Schritten:

a) Bereitstellen von M Anfangsfunktionen zum Repräsentieren der Karte (200),
b) Bereitstellen einer Menge von Informationselementen (160),
c) Bestimmen einer passenden Position in der Karte für ein Informationselement (160) der Menge,
d) Anpassen der die Karte repräsentierenden Funktionen in Abhängigkeit von der ermittelten passenden Position und dem Informationselement (160) und
e) Wiederholen der Schritte c) und d) für alle Informationselemente (160) der Menge.

11. Verfahren nach Anspruch 10, wobei jede der M Anfangsfunktionen die folgende Form hat:

$$\delta_j(x) = -a_j \cdot \varphi(fp_j, x) + b_j \text{ mit } j \in \{1, 2, ..., M\},$$

wobei

$a_j, b_j$ Konstanten sind, mit $a_j > 0$ und $b_j > 0$,
$x = (x^1,...,x^N)$ ein Punkt in der N-dimensionalen Karte ist,
$$fp_j = \left(fp_j^1, ..., fp_j^N\right)$$
der Punkt in der N-dimensionalen Karte ist, wo $\delta_j$ maximal ist, und wobei

$$\varphi(fp_j, x) = \sqrt{\sum_{i=1}^{N}(fp_j^i - x^i)^2}$$

ist.

12. Verfahren nach Anspruch 11, wobei der Schritt d) des Anpassens der M Funktionen den Schritt des Änderns der Positionen der Maxima $fp_j$ der M Funktionen umfasst.

**13.** Verfahren nach Anspruch 11 oder 12, wobei die Positionen der Maxima $fp_j$ der M Anfangsfunktionen

    - identisch gewählt werden oder
    - zufällig gewählt werden oder
    - derart gewählt werden, dass sie sich im Wesentlichen an der Grenze einer symmetrischen N-dimensionalen geometrischen Form befinden.

**14.** Verfahren nach Anspruch 12 oder 13, wobei die geänderte Position eines Maximums berechnet wird durch

$$* fp_j^i = fp_j^i + \left(bmp^i - fp_j^i\right) \cdot \varepsilon_1$$

$$\forall\, i \in \{1, \dots, N\}; \quad j \in \{1, 2, \dots, M\},$$

wobei

$$fp_j = \left(fp_j^1, \dots, fp_j^N\right)$$ die alte Position des Maximums ist,

$$* fp_j = \left(* fp_j^1, \dots, * fp_j^N\right)$$ die neue Position des Maximums ist,

$bmp = \{bmp^1, \dots, bmp^N\}$ die passende Position des Informationselements ist und
$\varepsilon_1$ eine vorgegebene Konstante ist.

**15.** Verfahren nach Anspruch 14, wobei $\varepsilon_1 \leq 0{,}1$ ist, insbesondere $\varepsilon_1 \leq 0{,}01$.

**16.** Verfahren nach einem der Ansprüche 11 bis 15, wobei der Schritt d) des Anpassens der M Funktionen den Schritt des Änderns der jeweiligen Konstante $b_j$ umfasst.

**17.** Verfahren nach Anspruch 16, wobei die geänderte Konstante $b_j$ berechnet wird durch

$$* b_j = \begin{cases} b_j \cdot (1 + \varepsilon_2) \text{ für } hv_j > b_j \\ b_j \cdot (1 - \varepsilon_2) \text{ für } hv_j \leq b_j \end{cases},$$

wobei

    $b_j$ der alte Wert der Konstante ist,
    $* b_j$ der neue Wert der Konstante ist,
    $hv_j$ das höchste Ergebnis der jeweiligen einen der M Funktionen für eine passende Position eines Informationselements der Menge von Informationselementen ist und
    $\varepsilon_2$ eine vorgegebene Konstante ist.

**18.** Verfahren nach Anspruch 17, wobei $\varepsilon_2 \leq 0{,}1$ ist, insbesondere $\varepsilon_2 \leq 0{,}01$.

**19.** Verfahren nach einem der Ansprüche 11 bis 18, wobei der Schritt d) des Anpassens der M Funktionen den Schritt des Änderns der jeweiligen Konstante $a_j$ umfasst.

**20.** Verfahren nach einem der vorhergehenden Ansprüche, wobei der Wert jeder Komponente (110) des mehrdimensionalen Vektors ein Merkmal des entsprechenden Informationselements (160) beschreibt.

**21.** Verfahren nach einem der vorhergehenden Ansprüche, wobei N gleich 2 ist.

**22.** Verfahren nach einem der vorhergehenden Ansprüche, ferner umfassend den Schritt des Visualisierens der passenden Position des mindestens einen Informationselements (160), wobei die passende Position in der N-dimensionalen Karte (200) gezeigt wird.

**23.** Verfahren nach einem der Ansprüche 1 bis 22, umfassend den Schritt des Definierens mindestens eines Bereichs (310, 320, 330) in der N-dimensionalen Karte (200), wobei ein anormaler Prozesszustand erkannt wird durch Ermitteln eines Informationselements, das auf eine Position (410) außerhalb des mindestens einen Bereichs (310, 320, 330) abgebildet wird.

24. System mit einer Abbildungseinrichtung, wobei die Abbildungseinrichtung dazu angepasst ist, ein Verfahren nach einem der Ansprüche 1 bis 23 auszuführen, und wobei das System ausgebildet ist als ein Prozesssteuerungssystem zum Erkennen eines anormalen Verhaltens einer Maschine oder eines Automatisierungssystems, das einen vorgegebenen Prozess ausführt, umfassend

    - eine Einrichtung zum Ermitteln einer Mehrzahl von unterschiedlichen Prozessparametern und
    - eine Einrichtung zum Bereitstellen eines mehrdimensionalen Prozessvektors mit M Komponenten, wobei jede der M Komponenten einem jeweiligen der Prozessparameter entspricht, und wobei die Abbildungseinrichtung dafür ausgebildet ist, den Prozessvektor auf eine N-dimensionale Karte (200) abzubilden, wobei das System weiterhin umfasst:
    - eine Anzeigeeinrichtung zum Visualisieren der Position (321, 410) des abgebildeten Prozessvektors in der N-dimensionalen Karte (200).

25. System nach Anspruch 24, umfassend

    - eine Einrichtung zum automatischen Erkennen eines anormalen Prozesszustands durch Ermitteln eines Prozessvektors, der auf eine Position (410) abgebildet ist, die außerhalb mindestens eines vorgegebenen Bereichs (310, 320, 330) in der N-dimensionalen Karte (200) liegt.

26. Digitales Speichermedium, welches elektronisch lesbare Steueranweisungen umfasst, wobei die Steueranweisungen dazu angepasst sind, bei Ausführung durch einen Computer ein Verfahren nach einem der Ansprüche 1 bis 23 auszuführen.

## Revendications

1. Procédé mis en oeuvre par ordinateur pour traiter des informations numériques où des éléments d'information (160) sont cartographiés sur une carte à N dimensions (200), de manière que des éléments d'information similaires (160) soient cartographiés à des positions similaires au sein de la carte (200), comprenant les étapes suivantes :

    - fournir au moins un élément d'information (160) et
    - cartographier ledit élément d'information (160) sur ladite carte à N dimensions (200) en déterminant une position concordante (150) au sein de la carte (200) pour l'élément d'information (160), dans lequel :
    - chaque élément d'information (160) est représenté par un vecteur multidimensionnel à M composantes (110), **caractérisé en ce que** :
    - la carte à N dimensions (200) est représentée par un ensemble de M fonctions de la position cartographique,
    - chacune desdites M fonctions est associée à l'une respective des M composantes vectorielles (110) de l'élément d'information (160), et
    - chacune desdites M fonctions a un maximum (201 à 207) en un point de la carte à N dimensions (200), dans lequel la fonction respective est monotonement décroissante à partir dudit maximum (201 à 207) dans une direction quelconque le long de la carte à N dimensions (200), dans lequel chaque élément d'information (160) est une représentation d'un état de processus d'un processus industriel automatisé, dans lequel les M composantes (110) de l'élément d'information multidimensionnel (160) sont des valeurs de paramètres de processus prédéfinis, et dans lequel par cartographie dudit élément d'information à une position particulière de ladite carte à N dimensions (200) un état anormal de processus est détecté.

2. Procédé selon la revendication 1, dans lequel chacune desdites M fonctions prend la forme :

$$\delta_j(x) = -a_j \cdot \varphi(fp_j, x) + b_j \texttt{ avec } j \in \{1, 2, \ldots, M\},$$

où $a_j$, $b_j$ : constantes avec $a_j > 0$ et $b_j > 0$, $x = (x^1, \ldots, x^N)$ : un point de la carte à N dimensions,

$$fp_j = \left(fp_j^1, \ldots, fp_j^N\right)$$ : le point de la carte à N dimensions où $\delta_j$ est maximale, et où

$$\varphi(fp_j, x) = \sqrt{\sum_{i=1}^{N}(fp_j^i - x^i)^2}$$

3. Procédé selon l'une quelconque des revendications précédentes, dans lequel l'étape de détermination de la position concordante (150) pour l'élément d'information (160) comprend les étapes suivantes :

- définir un réseau de noeuds de carte (130), chaque noeud ayant une position cartographique différente,
- calculer pour chaque noeud de carte (130) d'au moins un sous-ensemble dudit réseau un vecteur noeud multidimensionnel correspondant (135) à M composantes (120), dont les composantes sont déterminées par calcul de la sortie de celle respective desdites M fonctions pour la position cartographique du noeud de carte respectif (130), et
- déterminer le vecteur noeud multidimensionnel (135) qui concorde le mieux avec l'élément d'information (160), et
- sélectionner pour la position concordante (150) de l'élément d'information (160) la position du noeud de carte (130) qui correspond au vecteur noeud multidimensionnel (135) qui a été déterminé comme concordant le mieux avec l'élément d'information (160).

4. Procédé selon l'une quelconque des revendications précédentes, dans lequel l'étape de détermination de la position concordante (150) pour l'élément d'information (160) comprend les étapes suivantes :

a) sélectionner une région de recherche au sein de la carte à N dimensions (200),
b) diviser la région de recherche en un nombre prédéfini de sous-régions,
c) définir un noeud de carte (130) au sein de chacune desdites sous-régions,
d) déterminer la sous-région qui concorde le mieux avec l'élément d'information (160) :

- en calculant pour chacun des noeuds de carte définis (130) un vecteur noeud multidimensionnel correspondant (135) à M composantes (120), dont les composantes sont déterminées par calcul de la sortie de celle respective desdites M fonctions pour la position cartographique respective, et
- en déterminant le vecteur noeud multidimensionnel (135) qui concorde le mieux avec l'élément d'information (160),

e) répéter les étapes b) à d) pendant un nombre prédéfini de récursions avec la sous-région respective déterminée en tant que région de recherche pour la récursion suivante, et
f) sélectionner pour la position concordante de l'élément d'information une position au sein de la sous-région qui concorde le mieux avec l'élément d'information (160) .

5. Procédé selon la revendication 4, dans lequel l'étape de détermination de la position concordante (150) pour l'élément d'information (160) est effectuée à plusieurs reprises et dans lequel à l'étape a), la région de recherche est sélectionnée de manière que la position de la position concordante respective précédemment déterminée soit le centre de la région de recherche.

6. Procédé selon l'une quelconque des revendications 3 à 5, dans lequel l'étape de détermination du vecteur noeud multidimensionnel (135) qui concorde le mieux avec l'élément d'information (160) comprend la détermination du vecteur noeud (135) pour lequel une mesure de distance sélectionnée, en particulier la distance euclidienne, par rapport à l'élément d'information (160) est minimale.

7. Procédé selon l'une quelconque des revendications précédentes, dans lequel l'étape de détermination de la position concordante (150) pour l'élément d'information (160) comprend l'étape de calcul de la position cartographique où la fonction

$$\gamma(mu, iv) = \sqrt{\sum_{j=1}^{M} (iv_j - \delta_j(mu))^2}$$

est minimale, où

mu = $(mu^1,...,mu^N)$ : la position cartographique sur la carte à N dimensions,

iv = $(iv_1,...,iv_M)$: l'élément d'information à M dimensions,

$\delta_j(mu)$ : celle respective des M fonctions.

8. Procédé selon l'une quelconque des revendications précédentes, comprenant une phase d'apprentissage pour produire la carte (200) au moyen des étapes suivantes :

a) définir un réseau de noeuds de carte (130), chaque noeud ayant une position cartographique différente,

b) définir pour chaque noeud de carte (130) un vecteur poids multidimensionnel initial correspondant (135) à M composantes (120),

c) fournir un ensemble d'éléments d'information (160),

d) déterminer pour un élément d'information (160) dudit ensemble le vecteur poids concordant le mieux,

e) modifier les valeurs de composantes du vecteur poids déterminé comme concordant le mieux, pour mieux concorder avec les valeurs de composantes de l'élément d'information (160),

f) répéter les étapes d) et e) pour tous les éléments d'information dudit ensemble, et

g) déterminer les M fonctions pour représenter la carte à partir dudit réseau de vecteurs poids multidimensionnels en ajustant des paramètres variables d'une fonction donnée aux valeurs de composantes respectives des vecteurs poids.

9. Procédé selon la revendication 8, dans lequel à l'étape e) les valeurs de composantes des vecteurs poids voisins du vecteur poids déterminé comme concordant le mieux sont aussi modifiées pour mieux concorder avec l'élément d'information (160), dans lequel la grandeur de variation est fonction de la distance entre les noeuds de carte correspondant au vecteur poids concordant le mieux et au vecteur poids voisin respectif.

10. Procédé selon l'une quelconque des revendications précédentes, comprenant une phase d'apprentissage pour produire la carte (200) au moyen des étapes suivantes :

a) fournir M fonctions initiales pour représenter la carte (200),

b) fournir un ensemble d'éléments d'information (160),

c) déterminer une position concordante au sein de la carte pour un élément d'information (160) dudit ensemble,

d) adapter les fonctions représentant la carte en fonction de la position concordante déterminée et de l'élément d'information (160), et

e) répéter les étapes c) et d) pour tous les éléments d'information (160) dudit ensemble.

11. Procédé selon la revendication 10, dans lequel chacune desdites M fonctions initiales prend la forme :

$$\delta_j(x) = -a_j \cdot \varphi(fp_j, x) + b_j \text{ avec } j \in \{1, 2, ..., M\},$$

où

$a_j, b_j$ : constantes avec $a_j > 0$ et $b_j > 0$,

x = $(x^1,...,x^N)$ : un point de la carte à N dimensions,

$fp_j = \left(fp_j^1, ..., fp_j^N\right)$ : le point de la carte à N dimensions où $\delta_j$ est maximale, et où

$$\varphi\left(fp_j, x\right) = \sqrt{\sum_{i=1}^{N} \left(fp_j^i - x^i\right)^2}$$

**12.** Procédé selon la revendication 11, dans lequel l'étape d) d'adaptation des M fonctions comprend l'étape de modification de la position des maxima fpj des M fonctions.

**13.** Procédé selon la revendication 11 ou 12, dans lequel les positions des maxima fpj des M fonctions initiales :

- sont choisies pour être identiques, ou
- sont choisies au hasard, ou
- sont choisies pour se situer essentiellement sur la bordure d'une forme géométrique symétrique à N dimensions.

**14.** Procédé selon la revendication 12 ou 13, dans lequel la position modifiée d'un maximum est calculée au moyen de :

$$* fp_j^i = fp_j^i + \left(bmp^i - fp_j^i\right) \cdot \varepsilon_1$$

$$\forall\, i \in \{1, \dots, N\}\,;\, j \in \{1, 2, \dots, M\},$$

où

$$fp_j = \left(fp_j^1, \dots, fp_j^N\right)\ :\ \text{ancienne position du maximum,}$$

$$* fp_j = \left(* fp_j^1, \dots, * fp_j^N\right)\ :\ \text{nouvelle position du maximum,}$$

bmp = {bmp$^1$,...,bmp$^N$} : position concordante de l'élément d'information, et

$\varepsilon_1$ : une constante prédéfinie.

**15.** Procédé selon la revendication 14, dans lequel $\varepsilon_1 \le 0{,}1$, en particulier $\varepsilon_1 \le 0{,}01$.

**16.** Procédé selon l'une quelconque des revendications 11 à 15, dans lequel l'étape d) d'adaptation des M fonctions comprend l'étape de modification de la constante respective b$_j$.

**17.** Procédé selon la revendication 16,
dans lequel la constante modifiée b$_j$ est calculée au moyen de :

$$* b_j = \begin{cases} b_j \cdot (1 + \varepsilon_2) & pour\ hv_j > b_j \\ b_j \cdot (1 - \varepsilon_2) & pour\ hv_j \le b_j \end{cases},$$

où

b$_j$ : ancienne valeur de constante,
* b$_j$ : nouvelle valeur de constante,
hv$_j$ : sortie la plus élevée de celle respective des M fonctions pour une position concordante quelconque d'un élément d'information dudit ensemble d'éléments d'information, et
$\varepsilon_2$ : une constante prédéfinie.

**18.** Procédé selon la revendication 17, dans lequel $\varepsilon_2 \le 0{,}1$, en particulier $\varepsilon_2 \le 0{,}01$.

**19.** Procédé selon l'une quelconque des revendications 11 à 18, dans lequel l'étape d) d'adaptation des M fonctions comprend l'étape de modification de la constante respective a$_j$.

**20.** Procédé selon l'une quelconque des revendications précédentes, dans lequel la valeur de chaque composante (110) dudit vecteur multidimensionnel décrit une caractéristique de l'élément d'information correspondant (160).

**21.** Procédé selon l'une quelconque des revendications précédentes, dans lequel N est égal à 2.

**22.** Procédé selon l'une quelconque des revendications précédentes, comprenant en outre l'étape de visualisation de la position concordante de l'au moins un élément d'information (160), dans lequel la position concordante est représentée au sein de la carte à N dimensions (200).

**23.** Procédé selon l'une quelconque des revendications 1 à 22, comprenant l'étape de définition d'au moins une région (310, 320, 330) au sein de ladite carte à N dimensions (200), dans lequel un état anormal de processus est détecté par détection d'un élément d'information qui est cartographié à une position (410) à l'extérieur de ladite au moins une région (310, 320, 330).

**24.** Système comportant un moyen de cartographie, dans lequel ledit moyen de cartographie est conçu pour mettre en oeuvre un procédé selon l'une quelconque des revendications 1 à 23, et dans lequel ledit système est fourni en tant que système de commande de processus pour détecter un comportement anormal d'une machine ou d'un système d'automatisation qui exécute un processus prédéfini, comprenant :

- un moyen destiné à déterminer une pluralité de paramètres différents de processus, et
- un moyen destiné à fournir un vecteur processus multidimensionnel à M composantes, dans lequel chacune desdites M composantes correspond à l'un respectif desdits paramètres de processus, et dans lequel le moyen de cartographie est conçu pour cartographier ledit vecteur processus sur une carte à N dimensions (200), ledit système comprenant en outre :
- un dispositif d'affichage permettant de visualiser la position (321, 410) du vecteur processus cartographié au sein de la carte à N dimensions (200).

**25.** Système selon la revendication 24, comprenant :

- un moyen destiné à détecter automatiquement un état anormal de processus en détectant un vecteur processus qui est cartographié à une position (410) qui se trouve à l'extérieur d'au moins une région prédéfinie (310, 320, 330) au sein de la carte à N dimensions (200).

**26.** Support de stockage numérique, comprenant des instructions de commande lisibles par voie électronique, dans lequel lesdites instructions de commande sont conçues pour mettre en oeuvre, lorsqu'elles sont exécutées par un ordinateur, un procédé selon l'une quelconque des revendications 1 à 23.

Fig. 1

Fig. 2

Fig. 3

Fig. 4a

Fig. 4b

Fig. 5

Fig. 6

Fig. 7

Fig. 8

Fig. 9

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Self-Organizing Maps. **KOHONEN, T.** Springer Series in Information Sciences. Springer, 1995, vol. 30
- Topological Interpolation in SOM by Affine Transformation. **J. GÖPPERT et al.** Proceedings European Symposium on Artificial Neural Networks 1995. 19 April 1995, 15-20
- **KASKI, S.** *IEE Conference Publication,* 1999, vol. 2, 940-945
- WEBSOM- self-organizing maps of document collections. **HONKELA, T. ; KASKI, S. ; LAGUS, K. ; KOHONEN, T.** Proceedings of WSOM'97, Workshop on Self-Organizing Maps. Helsinki University of Technology, Neural Networks Research Centre, 04 June 1997, 310-315
- **CHEN, H. ; SCHUFFELS, C. ; ORWIG, R.** Internet categorization and search: a self-organizing approach. *Journal of Visual Communication and Image Representation,* 1996, vol. 7 (1), 88-102
- **FRITZKE, B.** *Neural Processing Letters,* 1995, vol. 2 (5), 9-13
- **MERKL, D. ; RAUBER, A.** Uncovering the hierarchical structure of text archives by using an unsupervised neural network with adaptive architecture. *Knowledge Discovery and Data Mining, proceedings,* 2000, 384-395

- Unsupervised clustering with growing cell structures. **FRITZKE, B.** Proc. IJCNN'91, International Joint Conference on Neural Networks. IEEE Service Center, 1991, vol. 2, 531-536
- **ROUSSINOV, D.G. ; CHEN, H. ; CC-AI.** A scalable self-organizing map algorithm for textual classification: a neural network approach to thesaurus generation. *The Journal for the Integrated Study of Artificial Intelligence,* 1998, vol. 15 (1-2), 81-111
- **ITO, M. ; MIYOSHI, T. ; MASUYAMA, H.** The characteristics of the torus self-organizing map. *6 th International COnference on Soft Computing,* 01 October 2000, 239-44
- **KASKI, S.** Fast winner search for som-based monitoring and retrieval of high-dimensional data. *IEE Conference Publication,* 1999, vol. 2, 940-945
- WEBSOM-self-organizing maps of document collections. **HONKELA, T. ; KASKI, S. ; LAGUS, K. ; KOHONEN, T.** Proceedings of WSOM'97, Workshop on Self-Organizing Maps. Helsinki University of Technology, Neural Networks Research Centre, 04 June 1997, 310-315